# EUROPÄISCHE PATENTSCHRIFT

(11) **EP 0 696 943 B1**
(45) Veröffentlichungstag und Bekanntmachung des Hinweises auf die Patenterteilung: **25.02.1998**
(21) Anmeldenummer: 94911846.7
(22) Anmeldetag: 11.04.1994
(51) Int. Cl.: B23C 5/10

(54) **SCHNEIDPLATTE**
CUTTING TOOL
OUTIL DE COUPE

(30) Priorität: 16.04.1993 DE 4312401
(43) Veröffentlichungstag der Anmeldung: 21.02.1996
(73) Patentinhaber: Widia GmbH, 45145 Essen (DE)
(72) Erfinder: STORCH, Helmut, D-91541 Rothenburg o.T. (DE)
(74) Vertreter: Schieferdecker, Lutz, Dipl.-Ing.
(86) Internationale Anmeldenummer: DE9400400
(87) Internationale Veröffentlichungsnummer: WO9423873

(56) Entgegenhaltungen:
- GB-A- 1 136 305
- GB-A- 2 082 102
- PATENT ABSTRACTS OF JAPAN vol. 16, no. 426 (M-1306) 8. September 1992 & JP,A,04 146 014 (MITSUBISHI MATERIALS) 20. Mai 1992
- PATENT ABSTRACTS OF JAPAN vol. 9, no. 87 (M-372) (1810) 17. April 1985 & JP,A,59 214 510 (TOSHIBA TUNGALOY) 4. Dezember 1984
- PATENT ABSTRACTS OF JAPAN vol. 13, no. 405 (M-868) 7. September 1989 & JP,A,01 146 665 (NORITAKE DIA) 8. Juni 1989

## Beschreibung

Die Erfindung betrifft eine Schneidplatte gemäß Oberbegriff von Patentanspruch 1 und einen zugehörigen Kugelkopfschlichtfräser, die insbesondere zum Kopierfräsen verwendbar sind.

Gattungsgemäße Schneidplatten für Kopierfräser sind seit langem bekannt und weisen gemäß JP-A-04 146 014 (PATENT ABSTRACTS OF JAPAN, vol. 16, no. 426/M-1306) einen aus Hartmetall bestehenden, als Träger dienenden Schneidplatten-Grundkörper auf, auf dem symmetrisch zwei ebenfalls aus Hartmetall bestehende Einsätze angeordnet sind, wobei sich die Einsätze auf einander gegenüberliegenden, Anlageflächen bildenden Seiten des Schneidplatten-Grundkörpers befinden. Die Zerspanleistung derartiger Fräser hängt von der Qualität ihrer Schneidkanten ab und es sind daher auch bereits Einsätze bekannt, die mit einer besonderen, die Schneidkante bildenden Schneidschicht bzw. Schneidstoffschicht versehen sind. Die Herstellung deser Einsätze mit einer nur wenige Zehntel Millimeter starken Schneidschcht ist allerdings außerordentlich aufwendig und daher mit hohen Kosten verbunden.

Darüberhinaus ist die körperliche Form und Gestalt der bekannten Einsätze kompliziert und aufwendig, so daß es notwendig war, sie unmittelbar auf dem als Träger dienenden, ebene und parallele Seitenflächen aufweisenden Schneidplatten-Grundkörper anzubringen. Die dadurch bedingte Anordnung der Einsätze führt zu einer extrem außermittigen Lage der Schneidkanten bezogen auf den Schneidplatten-Grundkörper, so daß dies beim Einsatz des Kopierfräsers berücksichtigt werden muß.

Der Erfindung liegt daher die Aufgabe zugrunde, eine insbesondere für Kugelkopfschlichtfräser bestimmte Schneidplatte derart zu optimieren, daß sie nicht nur eine hohe Zerspanleistung mit sich bringt und kostengünstig herstellbar ist, sondern auch sich problemlos einsetzen läßt.

Zur Lösung dieser Aufgabe sieht die Erfindung vor, daß die Einsätze kreissegmentförmig bzw. annähernd kreissegmentförmig sind, daß sie in entsprechend kreissegmentförmigen Ausnehmungen am Umfang des Schneidplatten-Grundkörpers angeordnet sind und daß die kreissegmentförmigen Ausnehmungen zugleich als Spankammern dienen.

Aufgrund ihrer kreissegmentförmigen bzw. annähernd kreissegmentförmigen Gestalt sind die Einsätze relativ kleine Körper und unter diesem Gesichtspunkt auch kostengünstig herstellbar. Darüberhinaus ist ihre Anordnung in Ausnehmungen am Umfang des Schneidplatten-Grundkörpers im Hinblick auf das Schneidverhalten der Schneidkanten besonders zweckmäßig und durch die zusätzlich vorgesehene, mindestens die Schneidkante bildende Schneidschicht/Schneidstoffschicht bringen sie hohe Zerspanleistungen. Vor allem unter Kostengesichtspunkten ist dabei die nur teilweise vorgesehene, lediglich die Schneidkanten bedeckende, zusätzliche Schneidschicht/ Schneidstoffschicht zweckmäßig.

Weitere Merkmale der Erfindung gehen aus Unteransprüchen in Verbindung mit der Beschreibung und der Zeichnung hervor.

Die Erfindung wird nachstehend anhand eines Ausführungsbeispieles, das in der Zeichnung dargestellt ist, näher beschrieben. Dabei zeigen:
- Fig. 1:: in größerem Maßstab eine Ansicht einer Schneidplatte;
- Fig. 2:: eine Ansicht der Schneidplatte in Richtung des Pfeiles "X" in Fig. 1 und
- Fig. 3:: abgebrochen sowie zum Teil im Schnitt das Ende eines Kugelkopfschlichtfräsers mit einer eingesetzten Schneidplatte in ebenfalls grösserem Maßstab.

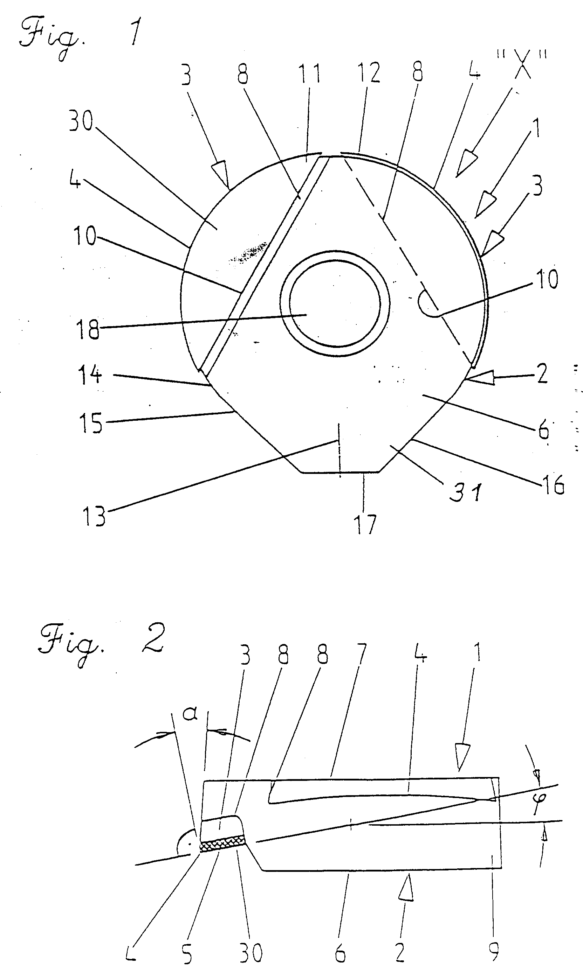

Eine Schneidplatte 1 besteht gemäß dem in Fig. 1 dargestellten Ausführungsbeispiel aus einem Schneidplatten-Grundkörper 2 und zwei Einsätzen 3, die je als Träger für eine die Schneidkante 4 bildende Schneidschicht 5 bzw. Schneidstoffschicht dienen. Die Einsätze 3 sind schließlich, wie die Figuren 1 und 2 zeigen, auf einander gegenüberliegenden, Anlageflächen 6 und 7 bildenden Seiten des Schneidplatten-Grundkörpers 2 angeordnet und befinden sich dort in Ausnehmungen 8, die hinsichtlich Form und Gestalt an die Form und Gestalt der Einsätze 3 angepaßt sind. Die Ausnehmungen 8 bilden ferner Spankammern.

Die Einsätze 3 sind kreissegmentförmig bzw. annahernd kreissegmentförmig und Gleiches gilt für die Ausnehmungen 8 am Umfang 9 des Schneidplatten-Grundkörpers 2.

Die Einsätze 3 weisen jeweils eine bogenförmige Schneidkante 4 und einen eine Sekante bildenden Rand 10 auf. Bezogen auf ihre sekantenartigen Ränder 10 sind die Einsätze 3 im Schneidplatten-Grundkörper spitzwinklig zueinander angeordnet. Ferner sind sie mit jeweils einem ihrer beiden Enden 11, 12 unmittelbar nebeneinander angeordnet. Schließlich liegen die segmentförmigen Einsätze 3 mit ihren sich längs einer Sekante erstreckenden Rändern 10 jeweils symmetrisch zu einer Grundkörper-Hauptachse 13, wie auch aus Fig. 1 hervorgeht.

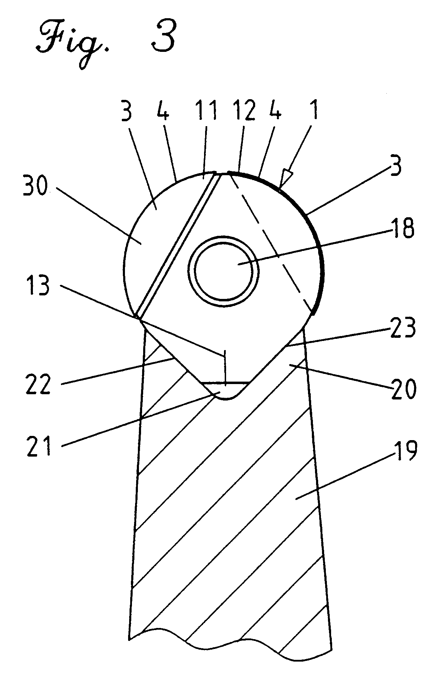

Schließlich zeigt Fig. 1, daß die Schneidkanten 4 der beiden Einsätze 3 zusammen einen sich über etwas mehr als 180° erstreckenden, kreisförmigen oder annähernd kreisförmigen Umfang definieren und daß auch der Schneidplatten-Grundkörper 2 eine sich über 180° erstreckende, im Querschnitt kreisförmige oder annähernd kreisförmige Kontur 14 aufweist, an die sich sodann symmetrisch konvergierende Ränder 15 und 16 und schließlich ein diese verbindender Basisrand 17 anschließen. In der Ansicht gemäß Fig. 1 besitzt der Schneidplatten-Grundkörper 2 somit etwa die Form eines "Heißluftballons", wobei noch eine Durchtrittsöffnung 18 für eine Befestigungsschraube zur Befestigung am kopfseitigen Ende 20 eines Kugelkopfschlichtfräsers 19 gemäß Fig. 3 vorgesehen ist.

Die Schneidplatte 1 ist am kopfseitigen Ende 20 des Kugelkopfschlichtfräsers 19 in einer Ausnehmung 21 angeordnet, die sich als Kanal diametral durch das kopfseitige Ende 20 erstreckt. Dabei liegen die Ränder 15 und 16 des Schneidplatten-Grundkörpers 2 auf entsprechenden Flanken 22, 23 der Ausnehmung 21 auf. Die beiden Einsätze 3 befinden sich gemäß Fig. 3 nach dem Einbau der Schneidplatte 1 in den Kugelkopfschlichtfräser 19 in einer diametralen Lage bezogen auf dessen kopfseitiges Ende 20.

Die Schneidschicht 5/Schneidstoffschicht kann eine CBN-Schicht (Kubisches Bor-Nitrit) oder eine PKD-Schicht (Polykristalliner Diamant) sein. Derartige Schichten werden zur Herstellung des Einsatzes auf einen Hartmetallträger aufgedampft, aufgesintert oder in sonstiger Weise erzeugt. Es kann sich bei der Schneidschicht 5/Schneidstoffschicht aber auch um einen anderen, aufgetragenen Werkstoff handeln. Grundsätzlich ist es auch möglich, daß die Schneidschicht 5/Schneidstoffschicht eine Keramikschicht ist, die auf den Einsätzen 3 in geeigneter Weise befestigt wird. Außerdem kann die aus CBN oder PKD bestehende Schneidschicht 5/Schneidstoffschicht zusätzlich mit verschleißhindernden Schichten, z.B. einem Aluminiumoxid (Al₂O₂) beschichtet sein.

Die Schneidschichten 5 bzw. die Schneidstoffschichten 5 dienen schließlich zugleich auch zur Bildung der Spanflächen 30.

Schließlich ist die Erfindung auch nicht auf die Verwendung bei Kugelkopfschlichtfräsern beschränkt. Die Verwendung erfindungsgemäßer Schneidplatten ist in Verbindung mit jedem Kugelkopffräser möglich und grundsätzlich auch in Verbindung mit anderen Werkzeugen, bei denen die Form und Gestalt der Schneidkanten dies zuläßt.

Gemäß Ausführungsbeispiel ist eine einzige Schneidplatte 1 am kopfseitigen Ende 20 des Kugelkopfschlichtfräsers 19 angeordnet, wobei der Freiwinkel α zwischen 2° und 20° und der Verdrehwinkel ϕ zwischen 2° und 15° betragen können.

Die benachbarten Enden 11 und 12 der beiden Einsätze 3 befinden sich gemäß Ausführungsbeispiel in einem geringen Abstand voneinander, wie Fig. 1 zeigt. Sie berühren sich nicht.

Die Schneidkanten 4 verlaufen nicht nur kreis- bzw. bogenförmig in Umfangsrichtung gemäß Fig. 1, sondern sie erstrecken sich gemäß Ausführungsbeispiel vorzugsweise auch quer dazu bogenförmig, wie Fig. 2 zeigt.

Der Schneidplatten-Grundkörper 2 ist gemäß dem in Fig. 1 dargestellten Ausführungsbeispiel eine fast kreisförmige Kreissegmentscheibe mit einem sich einstückig davon weg. erstreckenden, dreieckförmigen bzw. trapezförmigen, dem Kugelkopfschlichtfräser 19 zugewandten Ansatz 31, wobei das dem Kugelkopfschlichtfräser 19 zugewandte Ende bzw. der dort befindliche Basisrand 17 über den Umfang einer vollen Kreisscheibe vorsteht. Die kanalförmige Ausnehmung 21 im Kugelkopfschlichtfräser 19 ist schließlich zur Aufnahme des dreieckigen oder trapezförmigen Ansatzes 31 eine an diesen formschlüssig angepaßte Vertiefung, wie dies in Fig. 3 dargestellt ist. Die Ausnehmung 21 ist daher nicht nur kanalförmig, sondern sie weist zur Achse des Kugelkopfschlichtfräsers 19 hin fallende Flanken 22, 23 auf.

## Patentansprüche

1. Schneidplatte, insbesondere für einen zum Kopierfräsen bestimmten Kugelkopfschlichtfräser (19), mit einem aus Hartmetall bestehenden, als Träger dienenden Schneidplatten-Grundkörper (2), der mindestens zwei symmetrisch angeordnete, und ebenfalls aus Hartmetall bestehende Einsätze (3) aufweist, wobei die Einsätze (3) auf einander gegenüberliegenden, Anlageflächen (6, 7) bildenden Seiten des Schneidplatten-Grundkörpers (2) angeordnet sind, und die Einsätze (3) je eine zusätzliche, mindestens die Schneidkante (4) bildende Schneidschicht (5)/Schneidstoffschicht aufweisen dadurch gekennzeichnet, daß die Einsätze (3) kreissegmentförmig bzw. annähernd kreissegmentförmig sind, daß sie in entsprechend kreissegmentförmigen Ausnehmungen (8) am Umfang (9) des Schneidplatten-Grundkörpers (2) angeordnet sind und daß die kreissegmentförmigen Ausnehmungen (8) zugleich als Spankammern dienen.

2. Schneidplatte nach Anspruch 1, dadurch gekennzeichnet, daß die Einsätze (3) am Schneidplatten-Grundkörper (2) spitzwinklig zueinander sowie mit jeweils einem ihrer beiden Enden (11, 12) unmittelbar nebeneinander angeordnet sind.

3. Schneidplatte nach einem oder mehreren der vorhergehenden Ansprüche, dadurch gekennzeichnet, daß die Einsätze (3) jeweils eine bogenförmige Schneidkante (4) und einen eine Sekante bildenden Rand (10) aufweisen und daß sie - bezogen auf ihre sekantenartigen Ränder (10) - am Schneidplatten-Grundkörper (2) spitzwinklig zueinander angeordnet sind.

4. Schneidplatte nach einem oder mehreren der vorhergehenden Ansprüche, dadurch gekennzeichnet, daß die die Schneidschicht (5) tragenden Einsätze (3) an dem Schneidplatten-Grundkörper (2) angelötet sind.

5. Schneidplatte nach einem oder mehreren der vorhergehenden, Ansprüche, dadurch gekennzeichnet, daß die segmentförmigen Einsätze (3) mit ihren sich längs einer Sekante erstreckenden Rändern (10) jeweils, symmetrisch zu einer Grundkörper-Hauptachse (13) angeordnet sind.

6. Schneidplatte nach einem oder mehreren der vorhergehenden Ansprüche, dadurch gekennzeichnet, daß der Schneidplatten-Grundkörper (2) eine sich über mehr als 180° erstreckende, annähernd kreisförmige Kontur (14) aufweist, die in konvergierende Ränder (15, 16) eines sich einstückig wegerstreckenden, dem Kugelkopfschlichtfräser (19) zugewandten Ansatzes (31) übergeht.

7. Schneidplatte nach einem oder mehreren der vorhergehenden Ansprüche, dadurch gekennzeichnet, daß die Schneidschicht (5)/Schneidstoffschicht eine CBN-Schicht (Kubisches Bor-Nitrit) ist.

8. Schneidplatte nach einem oder mehreren der vorhergehenden Ansprüche, dadurch gekennzeichnet, daß die Schneidschicht (5) eine Keramikschicht ist.

9. Schneidplatte nach einem oder mehreren der vorhergehenden Ansprüche, dadurch gekennzeichnet, daß die aus CBN und/oder PKD bestehende Schneidschicht (5) / Schneidstoffschicht zusätzlich mit verschleißmindernden Stoffen, insbesondere Aluminiumoxid (Al₂O₃) ganz oder teilweise beschichtet ist.

10. Schneidplatte nach einem oder mehreren der vorhergehenden Ansprüche, dadurch gekennzeichnet, daß der Schneidplatten-Grundkörper (2) eine annähernd kreisförmige Kreissegmentscheibe mit einam sich einstückig davon wegerstreckenden Ansatz (31) ist.

11. Schneidplatte nach einem oder mehreren der vorhergehenden Ansprüche, gekennzeichnet durch eine diametrale Anordnung und Lage der Einsätze (3) am kopfseitigen Ende (20) des Kugelkopfschlichtfräsers (19).

12. Schneidplatte nach einem oder mehreren der vorhergehenden Ansprüche, dadurch gekennzeichnet, daß die Schneidschicht (5)/Schneidstoffschicht eine PKD-Schicht (Polykristalliner Diamant) ist.

13. Schneidplatte nach einam oder mehreren der vorhergehenden Ansprüche, dadurch gekennzeichnet, daß die Schneidschicht (5)/Schneidstoffschicht zugleich zur Bildung der Spanfläche (30) dient.

14. Schneidplatte nach einem oder mehreren der vorhergehenden Ansprüche, dadurch gekennzeichnet, daß die Schneidkanten (4) sich bogenförmig/kreisförmig in Umfangsrichtung und quer dazu bogenförmig erstrecken.

15. Schneidplatte nach einem oder mehreren der vorhergehenden Ansprüche, dadurch gekennzeichnet, daß der Freiwinkel α zwischen 2° und 20° und der Verdrehwinkel ϕ zwischen 2° und 15° beträgt.

16. Schneidplatte nach einem oder mehreren der vorhergehenden Ansprüche, dadurch gekennzeichnet, daß der Ansatz (31) dreieckförmig bzw. trapezförmig ist und daß er über den vollen Umfang der kreisförmigen Kontur der Schneidkanten (4) fräserseitig vorsteht.

17. Schneidplatte nach einem oder mehreren der vorhergehenden Ansprüche, dadurch gekennzeichnet, daß sie mit einer weiteren Beschichtung, insbesondere in Form eines Aluminiumoxids ((Al₂O₃) versehen ist.

18. Kugelkopfschlichtfräser mit Schneidplatte (1), mit einem Schneidplatten-Grundkörper (2) und mit kreissegmentförmigen bzw. annähernd kreissegmentförmigen Einsätzen (3) nach einem oder mehreren der vorhergehenden, die Schneidplatte betreffenden Ansprüchen 6-17, dadurch gekennzeichnet, daß er eine formschlüssig an den Ansatz (31) der Schneidplatte (1) angepasste, sowie kanalförmige Ausnehmung (21) mit zur Achse (13) hin fallenden Flanken (22, 23) aufweist.

## Claims

1. A cutting tip, in particular for a ball head finishing milling tool (19) intended for copy milling, comprising a main cutting tip body (2) which comprises hard metal and which serves as a carrier and which has at least two symmetrically arranged inserts (3) also comprising hard metal, wherein the inserts (3) are arranged on mutually oppositely disposed sides, which form contact surfaces (6, 7), of the main cutting tip body (2), and the inserts (3) each have a respective additional cutting layer (5)/cutting material layer forming at least the cutting edge (4), characterised in that the inserts (3) are in the shape of a segment of a circle or approximately in the shape of a segment of a circle, that they are arranged in recesses (8) at the periphery (9) of the main cutting tip body (2), said recesses (8) being in the corresponding form of a segment of a circle, and that the recesses (8) in the form of a segment of a circle serve at the same time as chip chambers.

2. A cutting tip according to claim 1 characterised in that the inserts (3) are arranged on the main cutting tip body (2) in acute-angled relationship to each other and in directly juxtaposed relationship with respective ones of their two ends (11, 12).

3. A cutting tip according to one or more of the preceding claims characterised in that the inserts (3) each have a respective arcuate cutting edge (4) and an edge (10) forming a secant and that - with respect to their secant-shaped edges (10) - they are arranged on the main cutting tip body (2) in acute-angled relationship with each other.

4. A cutting tip according to one or more of the preceding claims characterised in that the inserts (3) carrying the cutting layer (5) are soldered to the main cutting tip body (2).

5. A cutting tip according to one or more of the preceding claims characterised in that the segment-shaped inserts (3) are arranged with their respective edges (10) extending along a secant in symmetrical relationship with a principle axis (13) of the main body.

6. A cutting tip according to one or more of the preceding claims characterised in that the main cutting tip body (2) is of an approximately circular contour (14) which extends over more than 180° and which merges into convergent edges (15, 16) of a projection portion (31) which extends integrally away therefrom and which is towards the ball head finishing milling tool (19).

7. A cutting tip according to one or more of the preceding claims characterised in that the cutting layer (5)/cutting material layer is a CBN-layer (cubic boron nitrite).

8. A cutting tip according to one or more of the preceding claims characterised in that the cutting layer (5) is a ceramic layer.

9. A cutting tip according to one or more of the preceding claims characterised in that the cutting layer (5)/cutting material layer comprising CBN and/or PCD is additionally entirely or partially coated with wear-reducing materials, in particular aluminium oxide (Al₂O₃).

10. A cutting tip according to one or more of the preceding claims characterised in that the main cutting tip body (2) is an approximately circular segment-shaped disc with a projection portion (31) extending integrally away therefrom.

11. A cutting tip according to one or more of the preceding claims characterised by a diametral arrangement and position of the inserts (3) at the head end (20) of the ball head finishing milling tool (19).

12. A cutting tip according to one or more of the preceding claims characterised in that the cutting layer (5)/cutting material layer is a PCD-layer (polycrystalline diamond).

13. A cutting tip according to one or more of the preceding claims characterised in that the cutting layer (5)/cutting material layer serves at the same time to form the chip relief surface (30).

14. A cutting tip according to one or more of the preceding claims characterised in that the cutting edges (4) extend in an arcuate/circular configuration in the peripheral direction and arcuately transversely with respect thereto.

15. A cutting tip according to one or more of the preceding claims characterised in that the rake angle α is between 2° and 20° and the clearance angle ϕ is between 2° and 15°.

16. A cutting tip according to one or more of the preceding claims characterised in that the projection portion (31) is of a triangular or trapezoidal configuration and that it projects at the milling tool side over the full periphery of the circular contour of the cutting edges (4).

17. A cutting tip according to one or more of the preceding claims characterised in that it is provided with a further coating, in particular in the form of an aluminium oxide (Al₂O₃).

18. A ball head milling cutting tool with cutting tip (1), having a main cutting tip body (2) and inserts (3) which are in the form of a segment of a circle or approximately in the form of a segment of a circle, according to one or more of preceding claims 6 to 17 concerning the cutting tip, characterised in that it has a recess (21) which is adapted in positively locking relationship to the projection portion (31) of the cutting tip (1) and which is of a channel shape, with flanks (22, 23) which fall towards the axis (13).

## Revendications

1. Plaquette de coupe, notamment pour une fraiseuse-finisseuse à tête sphérique (19) destinée au fraisage par copiage, avec un corps de base de plaquette de coupe (2) réalisé en un métal dur, servant de support, qui présente au moins deux inserts (3) disposés symétriquement et également réalisés en un métal dur, les inserts (3) étant disposés sur des côtés opposés, formant des faces d'application (6, 7), du corps de base de plaquette de coupe (2), et les inserts (3) présentant chacun une couche coupante (5) / couche en matériau coupant additionnelle, formant au moins l'arête coupante (4), caractérisée en ce que les inserts (3) sont disposés en forme de segment de cercle respectivement approximativement en forme de segment de cercle, qu'ils sont disposés dans des évidements (8) d'une forme de segment de cercle correspondante sur le pourtour (9) du corps de base de plaquette de coupe (2) et que les évidements en forme de segment de cercle (8) servent en même temps de logements de copeaux.

2. Plaquette de coupe selon la revendication 1, caractérisée en ce que les inserts (3) sont disposés au corps de base de plaquette de coupe (2) l'un par rapport à l'autre suivant un angle aigu et d'une manière directement avoisinante par respectivement l'une de leurs deux extrémités (11, 12).

3. Plaquette de coupe selon l'une ou plusieurs des revendications précédentes, caractérisée en ce que les inserts (3) présentent respectivement une arête coupante en forme d'arc (4) et un bord (10) formant une sécante et en ce qu'ils sont disposés, relativement à leur bords en forme de sécante (10), suivant un angle aigu l'un relativement à l'autre corps de base de plaquette de coupe (2).

4. Plaquette de coupe selon l'une ou plusieurs des revendications précédentes, caractérisée en ce que les inserts (3) portant la couche coupante (5) sont brasés sur le corps de base de plaquette de coupe (2).

5. Plaquette de coupe selon l'une ou plusieurs des revendications précédentes, caractérisée en ce que les inserts en forme de segment (3) sont disposés avec leurs bords (10) s'étendant le long d'une sécante respectivement symétriquement à un axe principal de corps de base (13).

6. Plaquette de coupe selon l'une ou plusieurs des revendications précédentes, caractérisée en ce que le corps de base de plaquette de coupe (2) a un contour approximativement circulaire (14) s'étendant sur plus de 180° qui rejoint des bords convergents (15, 16) d'un bout rapporté (31) s'étendant au loin en une pièce, orienté vers la fraiseuse-finisseuse à tête sphérique (19).

7. Plaquette de coupe selon l'une ou plusieurs des revendications précédentes, caractérisée en ce que la couche coupante (5) / couche en matériau coupant est une couche en CBN (nitrure cubique de bore).

8. Plaquette de coupe selon l'une ou plusieurs des revendications précédentes, caractérisée en ce que la couche coupante (5) est une couche céramique.

9. Plaquette de coupe selon l'une ou plusieurs des revendications précédentes, caractérisée en ce que la couche coupante (5) / couche en matériau coupant constituée de CBN et/ou de PKD est recouverte de plus entièrement ou partiellement de matériaux résistant à l'usure, notamment d'oxyde d'aluminium (Al₂O₃).

10. Plaquette de coupe selon l'une ou plusieurs des revendications précédentes, caractérisée en ce que le corps de base de plaquette de coupe (2) est un disque en segment de cercle approximativement circulaire avec un bout rapporté (31) s'étendant en une pièce au loin de celui-ci.

11. Plaquette de coupe selon l'une ou plusieurs des revendications précédentes, caractérisée par un agencement et une position diamétrale des inserts (3) à l'extrémité côté tête (20) de la fraiseuse-finisseuse à tête sphérique (19).

12. Plaquette de coupe selon l'une ou plusieurs des revendications précédentes, caractérisée en ce que la couche coupante (5) / couche en matériau coupant est une couche en PKD (diamant polycristallin).

13. Plaquette de coupe selon l'une ou plusieurs des revendications précédentes, caractérisée en ce que la couche coupante (5) / couche en matériau coupant est destinée à former en même temps la face de coupe (30).

14. Plaquette de coupe selon l'une ou plusieurs des revendications précédentes, caractérisée en ce que les arêtes coupantes (4) s'étendent en forme d'arc / en forme de cercle dans la direction du pourtour et transversalement à celle-ci en forme d'arc.

15. Plaquette de coupe selon l'une ou plusieurs des revendications précédentes, caractérisée en ce que l'angle de dépouille α est compris entre 2° et 20° et l'angle de torsion ϕ entre 2° et 15°.

16. Plaquette de coupe selon l'une ou plusieurs des revendications précédentes, caractérisée en ce que le bout rapporté (31) à une forme de triangle ou de trapèze et qu'il fait saillie, côté fraise, sur tout le pourtour du contour circulaire des arêtes coupantes (4).

17. Plaquette de coupe selon l'une ou plusieurs des revendications précédentes, caractérisée en ce que celle-ci est pourvue d'un recouvrement additionnel, notamment sous forme d'un oxyde d'aluminium (Al₂O₃).

18. Fraiseuse-finisseuse à tête sphérique avec une plaquette de coupe (1), avec un corps de base de plaquette de coupe (2) et avec des inserts (3) en forme de segment de cercle ou approximativement en forme de segment de cercle selon l'une ou plusieurs des revendications précédentes 6-17 concernant la plaquette de coupe, caractérisée en ce qu'elle présente un évidement (21) en forme de canal, adapté par concordance des formes au bout rapport (31) de la plaquette de coupe (1), avec des flancs (22, 23) descendant vers l'axe (13).
